# EUROPÄISCHE PATENTSCHRIFT

(11) **EP 3 527 960 B1**
(45) Veröffentlichungstag und Bekanntmachung des Hinweises auf die Patenterteilung: **19.01.2022**
(21) Anmeldenummer: 19000080.2
(22) Anmeldetag: 12.02.2019
(51) Int. Cl.: G01G 13/29, G01G 17/06, G01G 19/22

(54) **VERFAHREN ZUR LACKABFÜLLUNG**
PAINT DISPENSING METHOD
PROCÉDÉ DE CONDITIONNEMENT DE PEINTURE

(30) Priorität: 14.02.2018 DE 102018103339
(43) Veröffentlichungstag der Anmeldung: 21.08.2019
(73) Patentinhaber: MG Colors GmbH, 97318 Kitzingen (DE)
(72) Erfinder: Müller, Gisbert, 97078 Würzburg (DE); Gallena, Michael, 97072 Würzburg (DE)
(74) Vertreter: Gleim, Christian Ragnar

(56) Entgegenhaltungen:
- CN-B- 101 590 994
- DE-T2- 69 401 449
- US-A1- 2011 203 701

## Beschreibung

Die Erfindung betrifft ein Verfahren zur Lackabfüllung gemäß dem unabhängigen Anspruch.

Es sind Verfahren zur Lackabfüllung bekannt, welche ein einfaches Wägeverfahren umfassen, wonach ein Lackbehälter auf einer Waage platziert ist und dieser händisch mit Lack befüllt wird, bis die Waage ein Zielgewicht innerhalb eines Toleranzgewichts erreicht hat.

Dabei wird der Lack in den Lackbehälter gefüllt, indem der Lack durch einen manuell verstellbaren Auslass in den Lackbehälter fließt.

Ein Problem bekannter Verfahren zur Lackabfüllung ist, dass wegen der geforderten hohen Genauigkeit sehr viel Talent des Bedieners erforderlich ist. Auch in Folge variierender Zusammensetzung unterschiedlicher Lacke, die jeweils andere Fließeigenschaften nach sich ziehen.

Insbesondere bei der Lackabfüllung von Hand ergibt sich das Problem, dass die Abfüllung ungenau ist. Vor allem bei Rezepturen von vielen unterschiedlichen Lacken ergibt sich ein großer Ausschuss, weil schon bei einem falschen Abfüllvorgang, die gesamte Mischung unbrauchbar ist.

Den Stand der Technik bilden die DE 69401449T2, US 2011/203701 A1 und CN 101590994 B.

Es ist die Aufgabe der vorliegenden Erfindung die Nachteile aus dem Stand der Technik zu beseitigen und insbesondere ein Verfahren bereitzustellen, welches für eine zuverlässige Lackabfüllung geeignet ist.

Die Aufgabe wird durch ein Verfahren zur Lackabfüllung gemäß dem unabhängigen Anspruch gelöst. Vorteilhafte Aspekte bilden den Gegenstand der jeweiligen Unteransprüche.

Indem die Lackflussgeschwindigkeit mit einer Ziel-Flussgeschwindigkeit abgeglichen wird, ist es unproblematisch, wenn die Lackflussgeschwindigkeit variiert. Indem das Lackabfüllgewicht mit dem Zielgewicht verglichen wird, kann eine genauere und konstante Lackabfüllung im Vergleich zur händischen Abfüllung erfolgen. Das Verfahren ist nicht darauf beschränkt, dass die Folge der Verfahrensschritte A - M einer zeitlichen Reihenfolge entspricht. Beispielsweise können Verfahrensschritte zeitgleich erfolgen.

Die Erfindung umfasst ferner, dass das Verfahren die Verfahrensschritte umfasst:
N) Bestimmen eines Nachtropfgewichts und N1) Speichern des Nachtropfgewichts in einer Datenbank; und wobei Verfahrensschritt K unter Berücksichtigung mindestens eines Nachtropfgewichts aus der Datenbank erfolgt. Das Nachtropfgewicht umfasst das Gewicht des Lacks, welcher noch in den Zielbehälter gelangt, nachdem das Ventil geschlossen wurde. Die Bereitstellung eines Nachtropfgewichts erlaubt die genauere Berechnung des Lackabfüllgewichts.

Besonders bevorzugt ist, wenn sich die Verfahrensschritte G, H, J, K und L insgesamt P-1 mal (P= 1, 2, 3, ...) periodisch nach einer Periodendauer Δt wiederholen. Dabei wird das Öffnungsventil in eine Ventilposition xₚ+₁ = xₚ + Δxₚ (mit p = 1, 2, 3, ..., P) gestellt, bis das Öffnungsventil geschlossen wird, wenn das Lackabfüllgewicht dem Zielgewicht entspricht. Das Verfahren kann einen Toleranzbereich für das Zielgewicht berücksichtigen. Die periodische Stellung des Öffnungsventils erlaubt eine periodische Anpassung der Lackflussgeschwindigkeit.

Nach einem vorteilhaften Aspekt umfasst das Verfahren den Verfahrensschritt:
J1) Speichern mindestens einer der Ventilpositionen x₁, x₂, ..., x_{P}+₁ in einer Datenbank; und wobei Verfahrensschritt E unter Berücksichtigung mindestens einer Ventilposition aus der Datenbank erfolgt. Mit der mindestens einen bereitgestellten Ventilposition aus der Datenbank kann eine erste Ventilposition für die nächste Lackabfüllung berechnet werden. Die Ventilpositionen x1, x2, ... beziehen sich auf Ziel-Lackflussgeschwindigkeiten, wobei x1 die langsamste Lackflussgeschwindigkeit herstellen soll. x2 ist etwas schneller usw. Beim Wiegevorgang wird zunächst mit x1 gestartet. Sobald die Flussgeschwindigkeit ausreichend stabil hergestellt werden konnte, kann zu x2 gewechselt werden. Voraussetzung hierfür ist, dass das Restgewicht über einem bestimmten Wert liegt. (Für jede Ziel-Flussgeschwindigkeit ist ein Mindest-Restgewicht hinterlegt.) Wird das Mindest-Restgewicht der aktuellen Ziel-Flussgeschwindigkeit unterschritten, wird diese wieder auf ein kleineres Level reduziert. Beispielsweise von x3 wieder auf x2. Auf diese Weise werden die Ventilstellungen beim Öffnen erlernt bzw. kontrolliert. Mit Annäherung an das Zielgewicht werden dann nur noch Ventilstellungen verwendet, sie schon als sicher angesehen werden können.

Weiterhin vorteilhaft ist, wenn die Periodendauer 0.01 sek. ≤ Δt ≤ 0.1 sek. ist. Diese Periodendauer erlaubt in der Praxis eine genaue Anpassung der Ventilpositionen.

Nach einem technischen Aspekt umfasst das Verfahren das Öffnen eines Tropfschutzes. Der Tropfschutz kann zwischen Lackbehälter und Zielbehälter angeordnet sein und verhindert das ungewollte Tropfen von Lack aus dem Lackbehälter in den Zielbehälter.

Weiterhin vorteilhaft ist, wenn der Verfahrensschritt M das periodische Öffnen und Schließen des Öffnungsventils nach einer Zeit Δt₂ umfasst, solange bis das Lackabfüllgewicht gleich dem Zielgewicht oder größer (innerhalb eines Toleranzgewichts) als das Zielgewicht ist. Dabei kann At₂ derart kurz gewählt werden, dass nur einzelne Tropfen Lack aus dem Lackbehälter in den Zielbehälter gelangen können.

Bevorzugt ist ein Lackbehälter zur Bereitstellung des Verfahrens zur Lackabfüllung umfassend eine Steuerplatine, einen Tropfschutz und ein Rührwerk. Die Steuerplatine kann dabei einen echtzeitfähigen Mikrocontroller umfassen.

Besonders vorteilhaft ist ein Lackabfüllsystem zur Durchführung des Verfahrens zur Lackabfüllung umfassend mindestens einen Lackbehälter, eine Waage, einen Zielbehälter und ein Laufband. Auf dem Laufband können mehrere Zielbehälter an einen für die Lackabfüllung vorgesehenen Lackbehälter gelangen, um befüllt zu werden. Das Öffnungsventil kann dabei an einem Boden des Lackbehälters angeordnet sein, sodass Lack unter Einfluss der Schwerkraft bei geöffnetem Öffnungsventil aus dem Lackbehälter fließen kann.

Weiterhin vorteilhaft ist, wenn das Laufband eine Schiene umfasst. Die Zielbehälter können sich dann unabhängig voneinander bewegen.

Bevorzugt ist ein Tropfschutz zwischen Lackbehälter und Zielbehälter angeordnet.

Im Folgenden wird die Erfindung anhand von Figuren näher erläutert.

Dabei zeigen:
- Fig. 1: eine schematische Darstellung des Verfahrens zur Lackabfüllung; und
- Fig. 2a: eine schematische Schnittansicht eines Bodens eines Lackbehälters und eines Öffnungsventils in einer ersten geschlossenen Ventilstellung; und
- Fig. 2b: eine schematische Schnittansicht eines Bodens eines Lackbehälters und eines Öffnungsventils in einer zweiten geöffneten Ventilstellung;
- Fig. 3: eine schematische Darstellung eines Teils eines Lackabfüllsystems mit einem Laufband und Zielbehältern;
- Fig. 4: Diagramm für Zielgewicht;
- Fig. 5.: Diagramm für Flussgeschwindigkeit; und
- Fig. 6.: Diagramm für Ventilposition.

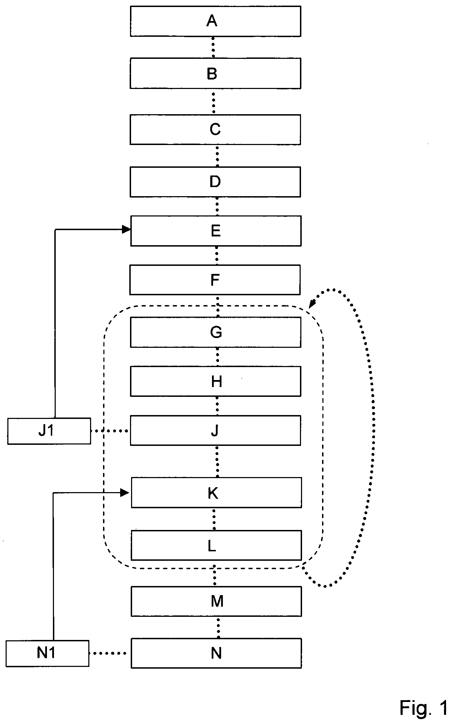

**Fig. 1** zeigt eine schematische Darstellung des Verfahrens zur Lackabfüllung umfassend die folgenden Verfahrensschritte:
A) Bereitstellen eines Lackbehälters umfassend Lack und ein an einem Endabschnitt des Lackbehälters angeordnetes Öffnungsventil
B) Bereitstellen einer Waage und eines auf der Waage positionierten (leer oder teilgefüllten) Zielbehälters;
C) Tarieren der Waage unter Berücksichtigung der Tara des Zielbehälters;
D) Bereitstellen eines Zielgewichts und einer Ziel-Flussgeschwindigkeit;
E) Bereitstellen einer ersten Ventilposition x₁;
F) Starten des Füllens des Zielbehälters mit Lack aus dem Lackbehälter durch Stellen des Öffnungsventils in die erste Ventilposition x₁;
G) Berechnen einer Lackflussgeschwindigkeit unter Berücksichtigung mindestens eines Lackgewichts im Zielbehälter;
H) Vergleich der Lackflussgeschwindigkeit mit der Ziel-Flussgeschwindigkeit;
J) Anpassen der Lackflussgeschwindigkeit durch Stellen des Öffnungsventils in eine Ventilposition x₂ = x₁ + Δx₁, falls die Lackflussgeschwindigkeit nicht der Ziel-Flussgeschwindigkeit entspricht;
K) Berechnen eines Lackabfüllgewichts unter Berücksichtigung des aktuellen Lackgewichts im Zielbehälter und der Lackflussgeschwindigkeit;
L) Vergleich des Lackabfüllgewichts mit dem Zielgewicht; und
M) Schließen des Öffnungsventils, wenn das Lackabfüllgewicht dem Zielgewicht entspricht.

Das Öffnungsventil kann dabei an einem Boden des Lackbehälters angeordnet sein, sodass Lack unter Einfluss der Schwerkraft bei geöffnetem Öffnungsventil aus dem Lackbehälter fließen kann.

Die Verfahrensschritte G, H, J, K und L wiederholen sich bevorzugt P-1 mal (P = 1, 2, 3, ...) periodisch nach einer Periodendauer Δt. Dabei wird das Öffnungsventil in eine Ventilposition xₚ₊₁ = xₚ + Δxₚ (mit p = 1, 2, 3, ..., P) gestellt, bis das Öffnungsventil geschlossen wird, wenn das Lackabfüllgewicht dem Zielgewicht (innerhalb eines Toleranzgewichts) entspricht. Die periodische Stellung des Öffnungsventils erlaubt eine periodische Anpassung der Lackflussgeschwindigkeit. Durch Stellen des Öffnungsventils wird die Lackflussgeschwindigkeit angepasst. Im dargestellten Beispiel wird das Öffnungsventil weiter geöffnet, um die Lackflussgeschwindigkeit zu erhöhen, wenn das berechnete Lackabfüllgewicht kleiner als das Zielgewicht ist, und weiter geschlossen, um die Lackflussgeschwindigkeit zu reduzieren, wenn das berechnete Lackabfüllgewicht größer als das Zielgewicht ist. Durch das Wiederholen der Verfahrensschritte G, H, J, K und L P-1 mal (P = 1, 2, 3, ...) periodisch nach einer Periodendauer Δt, wobei das Öffnungsventil in eine Ventilposition xₚ₊₁ = xₚ + Δxₚ (mit p = 1, 2, 3, ..., P) gestellt wird, kann die Lackflussgeschwindigkeit periodisch an die Ziel-Flussgeschwindigkeit angepasst werden.

Das Verfahren umfasst weiterhin den Verfahrensschritt:
J1) Speichern mindestens einer der Ventilpositionen x₁, x₂, ..., x_{P+1} in einer Datenbank;
und wobei Verfahrensschritt E unter Berücksichtigung mindestens einer Ventilposition aus der Datenbank erfolgt. Mit der mindestens einen bereitgestellten Ventilposition aus der Datenbank kann eine erste Ventilposition x₁ für die nächste Lackabfüllung berechnet werden, um eine an einen Lack angepasste erste Ventilposition x₁ für die nächste Lackabfüllung bereitzustellen.

Im dargestellten Verfahren ist die Periodendauer 0.01 sek. ≤ Δt ≤ 0.1 sek. Diese Periodendauer erlaubt eine genaue Anpassung der Ventilpositionen.

Das Verfahren umfasst erfindungsgemäß weiterhin die Verfahrensschritte N) Bestimmen eines Nachtropfgewichts und N1) Speichern des Nachtropfgewicht in einer Datenbank; und wobei Verfahrensschritt K unter Berücksichtigung mindestens eines Nachtropfgewichts aus der Datenbank erfolgt. Das Nachtropfgewicht umfasst das Gewicht des Lacks, welcher noch in den Zielbehälter gelangt, nachdem das Öffnungsventil geschlossen wurde. Dass das Verfahren das Speichern des Nachtropfgewicht in einer Datenbank umfasst, und wobei Verfahrensschritt K unter Berücksichtigung mindestens eines Nachtropfgewichts aus der Datenbank erfolgt, erlaubt die genauere Berechnung des Lackabfüllgewichts.

Nach einem technischen Aspekt umfasst das Verfahren das Öffnen eines Tropfschutzes (in Fig. 1 nicht gezeigt). Der Tropfschutz kann zwischen Lackbehälter und Zielbehälter angeordnet sein und verhindert das ungewollte Tropfen von Lack aus dem Lackbehälter in den Zielbehälter. Der Tropfschutz kann als ein schwenkbares Blech ausgebildet sein.

Der Verfahrensschritt M umfasst das periodische Öffnen und Schließen des Öffnungsventils nach einer Zeit At₂, solange bis das Lackabfüllgewichts gleich dem Zielgewicht oder größer (innerhalb eines Toleranzgewichts) als das Zielgewicht ist. Dabei kann Δt₂ derart kurz gewählt werden, dass nur einzelne Tropfen Lack aus dem Lackbehälter in den Zielbehälter gelangen können.

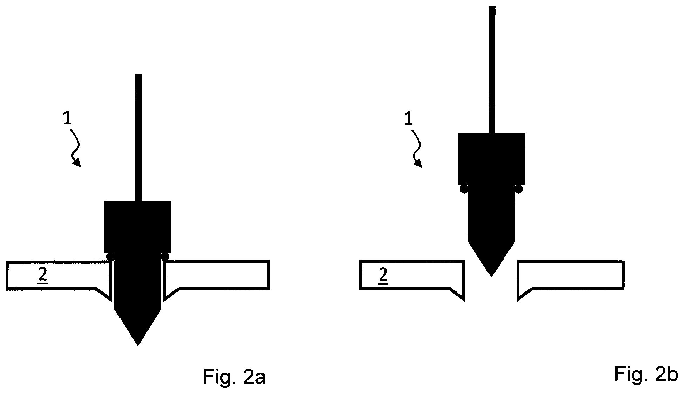

**Fig. 2a** und **Fig. 2b** zeigen zwei schematische Schnittansichten eines Bodens eines Lackbehälters 2 und eines Öffnungsventils 1 in einer ersten und in einer zweiten Ventilposition. Das Öffnungsventil 1 ist an einem Endabschnitt des Lackbehälters 2 - im gezeigten Beispiel am Boden des Lackbehälters - angeordnet.

Die geöffnete Position im gezeigten Beispiel ist die erste Ventilposition x₁. Während des Verfahrens wird nach einer Periodendauer Δt das Öffnungsventil 1 in eine Ventilposition xₚ₊₁ = xₚ + Δxₚ (mit p = 1, 2, 3, ..., P) gestellt, bis das Öffnungsventil 1 geschlossen wird, wenn das Lackabfüllgewicht dem Zielgewicht (innerhalb eines Toleranzgewichts) entspricht. Die periodische Stellung des Öffnungsventils 1 erlaubt eine periodische Anpassung der Lackflussgeschwindigkeit. Durch Stellen des Öffnungsventils 1 wird die Lackflussgeschwindigkeit angepasst. Im dargestellten Beispiel wird das Öffnungsventil 1 weiter geöffnet, um die Lackflussgeschwindigkeit zu erhöhen, wenn das berechnete Lackabfüllgewicht kleiner als bzw. weit genug vom Zielgewicht entfernt ist (sog. Mindest-Restgewicht), und weiter geschlossen, um die Lackflussgeschwindigkeit zu reduzieren, wenn das berechnete Lackabfüllgewicht größer als das Zielgewicht bzw. das Mindest-Restgewicht für die aktuelle Flussgeschwindigkeit unterschreitet.

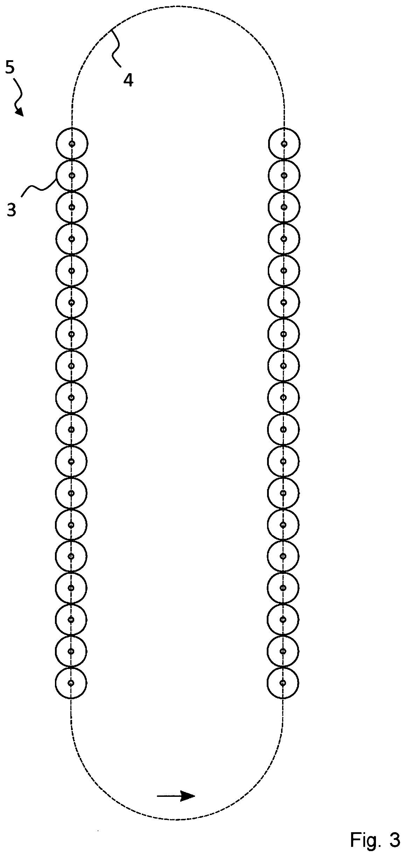

**Fig. 3** zeigt eine schematische Darstellung eines Teils eines Lackabfüllsystems 5 mit einem Laufband 4 und Zielbehältern 3. Das Lackabfüllsystem 5 zur Bereitstellung des Verfahrens zur Lackabfüllung umfasst mindestens einen Lackbehälter 2 (in Fig. 3 nicht gezeigt), eine Waage (in Fig. 3 nicht gezeigt), einen Zielbehälter 3 und ein Laufband 4. Im gezeigten Beispiel umfasst das Lackabfüllsystem 5 sechsunddreißig Zielbehälter 3. Die Zielbehälter 3 sind auf dem Laufband 4 angeordnet. Das Laufband 5 ist dabei aus Schienen gebildet und ist geschlossen umlaufend ausgebildet. Durch das Laufband 5 können die Zielbehälter zur Lackabfüllung zu einem Lackbehälter 1 (in Fig. 3 nicht gezeigt) befördert werden, um durch das erfindungsgemäße Verfahren zur Lackabfüllung befüllt zu werden.

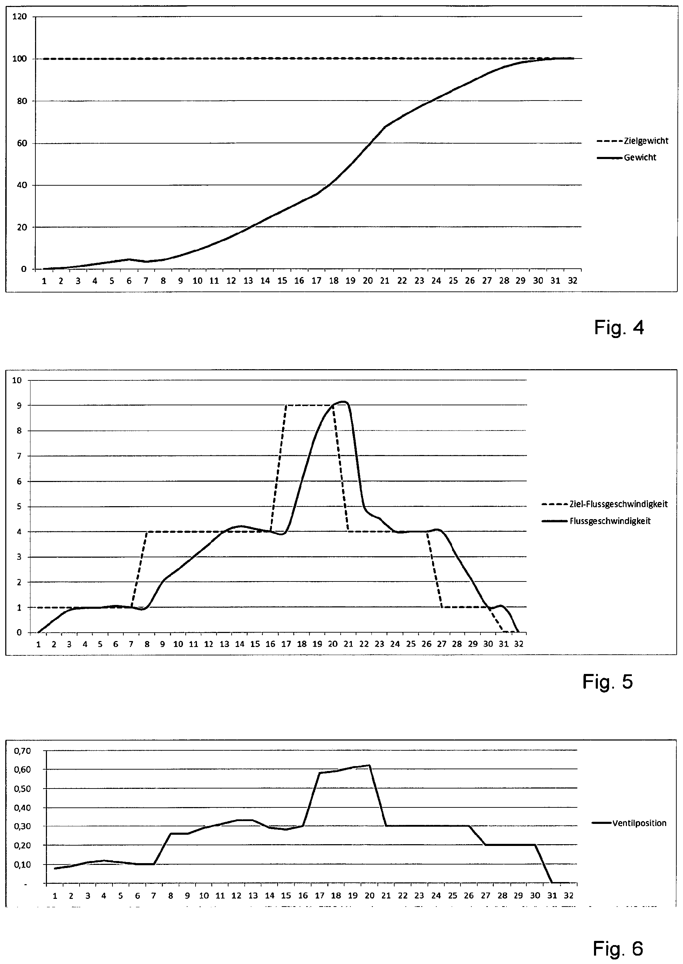

In Figuren 4 bis 6 ist jeweils ein Diagramm für einen beispielhaften Wiegevorgang basierend auf den folgenden Werten dargestellt:

| Zielgewicht | Gewicht | Ziel-Flussgeschwindigkeit | Flussgeschwindigkeit | Ventilposition |
|---|---|---|---|---|
| 100 | 0 | 1 | 0 | 0,08 |
| 100 | 0,5 | 1 | 0,5 | 0,09 |
| 100 | 1,4 | 1 | 0,9 | 0,11 |
| 100 | 2,38 | 1 | 0,98 | 0,12 |
| 100 | 3,37 | 1 | 0,99 | 0,11 |
| 100 | 4,42 | 1 | 1,05 | 0,10 |
| 100 | 3,38 | 1 | 1 | 0,10 |
| 100 | 4,38 | 4 | 1 | 0,26 |
| 100 | 6,38 | 4 | 2 | 0,26 |
| 100 | 8,88 | 4 | 2,5 | 0,29 |
| 100 | 11,88 | 4 | 3 | 0,31 |
| 100 | 15,38 | 4 | 3,5 | 0,33 |
| 100 | 19,38 | 4 | 4 | 0,33 |
| 100 | 23,58 | 4 | 4,2 | 0,29 |
| 100 | 27,68 | 4 | 4,1 | 0,28 |
| 100 | 31,68 | 4 | 4 | 0,30 |
| 100 | 35,68 | 9 | 4 | 0,58 |
| 100 | 41,68 | 9 | 6 | 0,59 |
| 100 | 49,68 | 9 | 8 | 0,61 |
| 100 | 58,68 | 9 | 9 | 0,62 |
| 100 | 67,68 | 4 | 9 | 0,30 |
| 100 | 72,68 | 4 | 5 | 0,30 |
| 100 | 77,18 | 4 | 4,5 | 0,30 |
| 100 | 81,18 | 4 | 4 | 0,30 |
| 100 | 85,18 | 4 | 4 | 0,30 |
| 100 | 89,18 | 4 | 4 | 0,30 |
| 100 | 93,18 | 1 | 4 | 0,20 |
| 100 | 96,18 | 1 | 3 | 0,20 |
| 100 | 98,18 | 1 | 2 | 0,20 |
| 100 | 99,18 | 1 | 1 | 0,20 |
| 100 | 100,18 | 0 | 1 | - |
| 100 | 100,18 | 0 | 0 | - |

In **Fig. 4** ist das das Ziel- und das aktuelle Gewicht dargestellt. Deutlich zu erkennen ist der langsame Start (auf niedriger Flussgeschwindigkeit), der schnellere Anstieg in der Mitte und das langsame Annähern gegen Ende des Abfüllvorgangs. (Das optionale periodische Einzel-Tropfenverfahren ist hier nicht dargestellt.)

In **Fig. 5** ist die Ziel-Flussgeschwindigkeit und die aktuelle (tatsächlich gemessene) Flussgeschwindigkeit dargestellt. Der Vorgang startet mit der geringsten Flussgeschwindigkeit. Sobald sich diese stabil eingestellt hat, wird diese erhöht (hier zweimal). In etwa der Mitte ist das Restgewicht so klein, dass die aktuelle Ziel-Flussgeschwindigkeit zu groß wäre, daher wird sie wieder um eine Stufe reduziert (ebenfalls zweimal). Kurz vor Ende wird das Ventil geschlossen.

In **Fig. 6** ist die tatsächliche Ventilposition dargestellt. Diese wird ständig nachgeregelt, um die gewünschte Zielflussgeschwindigkeit einzuhalten. Gegen Ende ist normalerweise weniger "Nachregeln" nötig.

## Patentansprüche

1. Verfahren zur Lackabfüllung umfassend die folgenden Verfahrensschritte:
A) Bereitstellen eines Lackbehälters (2) umfassend Lack und ein an einem Endabschnitt des Lackbehälters (2) angeordnetes Öffnungsventil (1);
B) Bereitstellen einer Waage und eines auf der Waage positionierten (leer oder teilgefüllten) Zielbehälters (3);
C) Tarieren der Waage unter Berücksichtigung der Tara des Zielbehälters (3);
D) Festlegen eines Zielgewichts und einer Ziel-Flussgeschwindigkeit;
E) Festlegen einer ersten Ventilposition x1;
F) Starten des Füllens des Zielbehälters (3) mit Lack aus dem Lackbehälter (2) durch Stellen des Öffnungsventils (1) in die erste Ventilposition x1;
G) Berechnen einer Lackflussgeschwindigkeit unter Berücksichtigung mindestens eines Lackgewichts im Zielbehälter (3);
H) Vergleich der Lackflussgeschwindigkeit mit der Ziel-Flussgeschwindigkeit;
J) Anpassen der Lackflussgeschwindigkeit durch Stellen des Öffnungsventils (1) in eine Ventilposition x2 = x1 + Δx1, falls die Lackflussgeschwindigkeit nicht der Ziel-Flussgeschwindigkeit entspricht;
K) Berechnen eines Lackabfüllgewichts unter Berücksichtigung des aktuellen Lackgewichts im Zielbehälter (3) und der Lackflussgeschwindigkeit;
L) Vergleich des Lackabfüllgewichts mit dem Zielgewicht; und
M) Schließen des Öffnungsventils (1), wenn das Lackabfüllgewicht dem Zielgewicht im Rahmen eines Toleranzgewichts entspricht;
**dadurch gekennzeichnet, dass**
das Verfahren die folgenden weiteren Verfahrensschritte aufweist:
N) Bestimmen eines Nachtropfgewichts und
N1) Speichern des Nachtropfgewichts in einer Datenbank; und wobei Verfahrensschritt K unter Berücksichtigung mindestens eines Nachtropfgewichtes aus der Datenbank erfolgt.

2. Verfahren nach Anspruch 1, wobei die Verfahrensschritte G, H, J, K, L sich insgesamt P-1 mal (P = 1, 2, 3, ...) periodisch nach einer Periodendauer Δt wiederholen, wobei das Öffnungsventil (1) in eine Ventilposition xp+1 = xp + Δxp (mit p = 1, 2, 3, ..., P) gestellt wird, bis das Öffnungsventil (1) geschlossen wird, wenn das Lackabfüllgewicht dem Zielgewicht im Rahmen eines Toleranzgewichts entspricht.

3. Verfahren nach Anspruch 1 und 2 umfassend den Verfahrensschritt:
J1) Speichern mindestens einer der Ventilpositionen x1, x2, ..., xP+1 in einer Datenbank;
und wobei Verfahrensschritt E unter Berücksichtigung mindestens einer Ventilposition aus der Datenbank erfolgt.

4. Verfahren nach Anspruch 2 oder 3, wobei die Periodendauer 0.01s ≤ Δt ≤ 0.1s ist.

5. Verfahren nach einem der vorangehenden Ansprüche, umfassend das Öffnen eines Tropfschutzes.

6. Verfahren nach einem der vorangehenden Ansprüche, wobei der Verfahrensschritt M das periodische Öffnen und Schließen des Öffnungsventils (1) nach einer Zeit Δt2 umfasst, solange bis das Lackabfüllgewicht gleich dem Zielgewicht oder größer (innerhalb eines Toleranzgewichts) als das Zielgewicht ist.

7. Lackbehälter (2) zur Bereitstellung des Verfahrens zur Lackabfüllung nach einem der vorangehenden Ansprüche umfassend eine Steuerplatine (echtzeitfähiger Mikrocontroller), einen Tropfschutz und ein Rührwerk.

8. Lackabfüllsystem (5) zur Bereitstellung des Verfahrens zur Lackabfüllung nach einem der vorangehenden Ansprüche umfassend mindestens einen Lackbehälter (2), eine Waage, einen Zielbehälter (3) und ein Laufband (4).

9. Lackabfüllsystem (5) nach Anspruch 8, wobei das Laufband (4) eine Schiene umfasst.

## Claims

1. Method for filling of lacquer, comprising the following method steps of:
A) providing a lacquer container (2) containing lacquer and an opening valve (1) arranged at an end portion of the lacquer container (2);
B) providing a scale and a target container (3) (empty or partially filled) positioned on the scale;
C) taring the scale taking into account the tare of the target container (3);
D) specifying a target weight and a target flow velocity;
E) specifying a first valve position x1;
F) starting to fill the target container (3) with lacquer from the lacquer container (2) by setting the opening valve (1) to the first valve position x1;
G) calculating a lacquer flow velocity taking into account at least one lacquer weight in the target container (3);
H) comparing the lacquer flow velocity with the target flow velocity;
J) adjusting the lacquer flow velocity by setting the opening valve (1) to a valve position x2 = x1 + Δx1 if the lacquer flow velocity does not correspond to the target flow velocity;
K) calculating a lacquer filling weight taking into account the current lacquer weight in the target container (3) and the lacquer flow velocity;
L) comparing the lacquer filling weight with the target weight; and
M) closing the opening valve (1) when the lacquer filling weight corresponds to the target weight within a tolerance weight range;
**characterized in that**
the method comprises the following further method steps of:
N) determining an subsequent-dripping weight, and
N1) storing the subsequent-dripping weight in a database;
and wherein method step K is carried out taking into account at least one subsequent-dripping weight from the database.

2. Method according to claim 1, wherein method steps G, H, J, K, L are repeated a total of P-1 times (P = 1, 2, 3, ...) periodically after a period duration Δt, wherein the opening valve (1) is set to a valve position xp+1 = xp + Δxp (with p = 1, 2, 3, ..., P) until the opening valve (1) is closed, when the lacquer filling weight corresponds to the target weight within a tolerance weight range.

3. Method according to claim 1 and 2, comprising the method step of:
J1) storing at least one of valve positions x1, x2, ..., xP+1 in a database; and wherein method step E is carried out taking into account at least one valve position from the database.

4. Method according to claim 2 or 3, wherein the period duration is 0,01s ≤ Δt ≤ 0,1s.

5. Method according to any one of the preceding claims, comprising the opening of a drip guard.

6. Method according to any one of the preceding claims, wherein method step M comprises periodical opening and closing of the opening valve (1) after a time Δt2 until the lacquer filling weight is equal to or greater than (within a tolerance weight range) the target weight.

7. Lacquer container (2) for implementing the method for filling of lacquer according to any one of the preceding claims, comprising a control board (real-time-capable microcontroller), a drip guard, and a stirrer.

8. Lacquer filling system (5) for implementing the method for filling of lacquer according to any one of the preceding claims, comprising at least one lacquer container (2), a scale, a target container (3) and a conveyor belt (4).

9. Lacquer filling system (5) according to claim 8, wherein the conveyor belt (4) comprises a rail.

## Revendications

1. Procédé de remplissage de laque, comprenant les étapes de procédé suivantes :
A) fournir un récipient de laque (2) contenant de la laque et une soupape d'ouverture (1) disposée à une partie d'extrémité du récipient de laque (2) ;
B) fournir une balance et un récipient cible (3) (vide ou partiellement rempli) positionné sur la balance ;
C) tarer la balance en tenant compte de la tare du récipient cible (3) ;
D) spécifier un poids cible et une vitesse d'écoulement cible ;
E) spécifier une première position de soupape x1 ;
F) commencer à remplir le récipient cible (3) avec de la laque provenant du récipient de laque (2) en plaçant la soupape d'ouverture (1) dans la première position de soupape x1 ;
G) calculer une vitesse d'écoulement de la laque en tenant compte d'au moins un poids de laque dans le récipient cible (3) ;
H) comparer la vitesse d'écoulement de la laque avec la vitesse d'écoulement cible ;
J) ajuster la vitesse d'écoulement de la laque en réglant la soupape d'ouverture (1) à une position de soupape x2 = x1 + Δx1 si la vitesse d'écoulement de la laque ne correspond pas à la vitesse d'écoulement cible ;
K) calculer un poids de remplissage de laque en tenant compte du poids actuel de laque dans le récipient cible (3) et de la vitesse d'écoulement de laque ;
L) comparer le poids de remplissage de laque avec le poids cible ; et
M) fermer la soupape d'ouverture (1) lorsque le poids de remplissage de laque correspond au poids cible dans une plage de poids de tolérance ;
**caractérisé en ce que**
le procédé comprend les étapes de procédé supplémentaires suivantes :
N) déterminer un poids d'égouttage subséquent et
N1) stocker le poids d'égouttage subséquent dans une base de données ;
et dans lequel l'étape K du procédé est exécutée en tenant compte d'au moins un poids d'égouttage subséquent provenant de la base de données.

2. Procédé selon la revendication 1, dans lequel les étapes de procédé G, H, J, K, L sont répétées au total P-1 fois (P = 1, 2, 3, ...) périodiquement après une durée de période Δt, la soupape d'ouverture (1) étant réglée sur une position de soupape xp+1 = xp + Δxp (avec p = 1, 2, 3, ..., P) jusqu'à ce que la soupape d'ouverture (1) soit fermée lorsque le poids de remplissage de laque correspond au poids cible dans une plage de poids de tolérance.

3. Procédé selon les revendications 1 et 2, comprenant l'étape de procédé consistant à :
J1) stocker au moins une des positions de soupape x1, x2, ..., xP+1 dans une base de données ;
et dans lequel l'étape E du procédé est exécutée en tenant compte d'au moins une position de soupape provenant de la base de données.

4. Procédé selon la revendication 2 ou 3, dans lequel la durée de période est de 0,01s ≤ Δt ≤ 0,1s.

5. Procédé selon l'une quelconque des revendications précédentes, comprenant l'ouverture d'une partie anti-gouttes.

6. Procédé selon l'une quelconque des revendications précédentes, dans lequel l'étape M du procédé comprend l'ouverture et la fermeture périodiques de la soupape d'ouverture (1) après un temps Δt2 jusqu'à ce que le poids de remplissage de laque soit égal ou supérieur (dans une plage de poids de tolérance) au poids cible.

7. Récipient de laque (2) pour la mise en œuvre du procédé de remplissage de laque selon l'une quelconque des revendications précédentes, comprenant une platine de commande (microcontrôleur adapté au temps réel), une partie anti-gouttes, et un agitateur.

8. Système de remplissage de laque (5) pour la mise en œuvre du procédé de remplissage de laque selon l'une quelconque des revendications précédentes, comprenant au moins un récipient de laque (2), une balance, un récipient cible (3) et une bande transporteuse (4).

9. Système de remplissage de laque (5) selon la revendication 8, dans lequel la bande transporteuse (4) comprend un rail.
